# EUROPEAN PATENT APPLICATION

(11) **EP 4 478 678 A1**
(43) Date of publication of application: **18.12.2024**
(21) Application number: 24178783.7
(22) Date of filing: 29.05.2024
(51) Int. Cl.: H04L 41/14

(54) **METHODS, APPARATUSES AND NON-TRANSITORY COMPUTER READABLE MEDIUMS FOR DIGITAL TWIN TIME MANAGEMENT**

(30) Priority: 16.06.2023 FI 20235679
(71) Applicant: Nokia Solutions and Networks Oy, 02610 Espoo (FI)
(72) Inventor: ALI-TOLPPA, Janne, Pirkkala (FI); GOERGE, Jürgen, Neuried (DE); KAJÓ, Márton, Munich (DE)
(74) Representative: Nokia EPO representatives

(57) **Abstract**

A method for managing time in a digital twin (DT) includes synchronizing a DT clock with a simulation time corresponding to a wall clock time being simulated, and controlling the simulation time in synchronization with the DT clock.

## Description

### BACKGROUND

A Digital Twin (DT) is a virtual replica of an operational or planned system, where specific aspects of the system are modeled using a computer. DTs can be used to simulate the real-world system to perform analysis of different system configurations or system changes.

A Network Digital Twin (NDT) is a DT that models selected aspects of a communication network and the relevant part of its environment. The term NDT is used to refer to different concepts, which replicate the network in different ways based on the requirements of various use cases. One of such use cases is sandboxing, where a NDT may be used to perform what-if analysis or to validate configuration changes proposed by Network Planning and Optimization (NPO) functions, before deploying the network automation function or its proposed changes to the real network.

### SUMMARY

The scope of protection sought for various example embodiments of the disclosure is set out by the independent claims. The example embodiments and/or features, if any, described in this specification that do not fall under the scope of the independent claims are to be interpreted as examples useful for understanding various embodiments.

One or more example embodiments provide methods, apparatuses and non-transitory computer readable mediums for managing time in a digital twin (DT), for example a network digital twin (NDT).

At least one example embodiment provides a method for managing time in a digital twin (DT) includes synchronizing a DT clock with a simulation time corresponding to a wall clock time being simulated, and controlling the simulation time in synchronization with the DT clock.

The synchronizing further includes mapping a simulation frame of the DT to a point in time being simulated by the simulation frame.

The synchronizing further includes synchronizing selected features in the DT with key frames, and synchronizing the DT clock with timestamps of the key frames.

The frequency of the key frames may be lower than a simulation framerate of the DT.

The synchronizing further includes interpolating features included in simulation frames between the key frames or simulating the features included in the simulation frames between the key frames.

The DT may include a first DT and a plurality of second DTs, and the synchronizing the DT clock further includes synchronizing a respective second DT clock of each of the plurality of second DTs with a first DT clock of the first DT.

The calibrating further includes determining a DT time delay based on a delay between the simulation time and the wall clock time, wherein the synchronizing includes synchronizing the DT clock based on the DT time delay budget.

The DT time delay budget may correspond with a longest feature synchronization delay between the simulation time and the wall clock time.

The controlling the simulation time may include at least one of pausing the simulation time, stopping the simulation time, moving to a specified point in the simulation time, configuring the simulation speed, synchronizing the simulation time to the wall clock, or desynchronizing the simulation time from the wall clock.

The synchronizing further includes configuring a DT time delay budget to ensure consistent synchronization of features taking into account individual synchronization delays of the features, the controlling further includes synchronizing the DT clock with the wall clock, the DT clock indicating an actual DT clock delay, and the method further includes notifying a user if synchronization is not completed within the time delay budget.

At least one example embodiment provides a device for managing time in a digital twin (DT), the device including at least one memory storing computer program code, and at least one processor configured to execute the computer program code and cause the device to, synchronize a DT clock with a simulation time corresponding to a wall clock time being simulated, and control the simulation time in synchronization with the DT clock.

The at least one memory and the computer program code are further configured to, with the at least one processor, cause the device to map a simulation frame of the DT to a point in time being simulated by the simulation frame.

The at least one memory and the computer program code are further configured to, with the at least one processor, cause the device to synchronize selected features in the DT with key frames, and synchronize the DT clock to values in the key frames.

A frequency of the key frames may be lower than a simulation framerate of the DT.

The at least one memory and the computer program code are further configured to, with the at least one processor, cause the device to interpolate features included in simulation frames between the key frames, or simulate the features included in the simulation frames between the key frames.

The DT may include a first DT and a plurality of second DTs, and the at least one memory and the computer program code are further configured to, with the at least one processor, cause the device to synchronize a respective second DT clock of each of the plurality of second DTs with a first DT clock of the first DT.

The at least one memory and the computer program code are further configured to, with the at least one processor, cause the device to determine a DT time delay budget based on a delay between the simulation time and the wall clock time, and synchronize the DT clock based on the DT time delay.

The at least one memory and the computer program code are further configured to, with the at least one processor, control the simulation time by at least one of pausing the simulation time, stopping the simulation time, moving to a specified point in the simulation time, configuring the simulation speed, synchronizing the simulation time to the wall clock, or desynchronizing the simulation time from the wall clock.

At least one example embodiment provides a non-transitory computer-readable storage medium storing computer-readable instructions that, when executed, cause one or more processors to cause a device to perform a method for managing time in a digital twin (DT), the method including synchronizing a DT clock with a simulation time corresponding to a wall clock time being simulated, and controlling the simulation time in synchronization with the DT clock.

At least one example embodiment provides a device for managing time in a digital twin (DT), the device including a means for synchronizing a DT clock with a simulation time corresponding to a wall clock time being simulated, and a means for controlling the simulation time in synchronization with the DT clock

### BRIEF DESCRIPTION OF THE DRAWINGS

Example embodiments will become more fully understood from the detailed description given herein below and the accompanying drawings, wherein like elements are represented by like reference numerals, which are given by way of illustration only and thus are not limiting of this disclosure.
FIG. 1 shows an example of a closed-loop NPO function sandbox.
FIG. 2 shows an example of a NPO function as a NDT consumer.
FIGS. 3A and 3B are example diagrams showing a problem of time synchronization.
FIG. 4 is a block diagram illustrating an example system for synchronizing a clock among digital twins according to example embodiments.
FIG. 5 is an illustration providing an example of synchronization between a real network and an NDT according to example embodiments.
FIG. 6 is a diagram showing an example system for synchronizing a clock among digital twins according to example embodiments.
FIG. 7 is a functional block diagram of an example system for synchronizing a clock among digital twins according to example embodiments.
FIG. 8 is an object model of the NDTClock interface according to example embodiments.
FIG. 9 is a signal flow diagram of a method for managing time in a NDT according to example embodiments.
FIG. 10 is flow chart illustrating a method for initializing a NDT clock according to example embodiments.

It should be noted that these figures are intended to illustrate the general characteristics of methods, structure and/or materials utilized in certain example embodiments and to supplement the written description provided below. These drawings are not, however, to scale and may not precisely reflect the precise structural or performance characteristics of any given embodiment, and should not be interpreted as defining or limiting the range of values or properties encompassed by example embodiments. The use of similar or identical reference numbers in the various drawings is intended to indicate the presence of a similar or identical element or feature.

### DETAILED DESCRIPTION

Various example embodiments will now be described more fully with reference to the accompanying drawings in which some example embodiments are shown.

Detailed illustrative embodiments are disclosed herein. However, specific structural and functional details disclosed herein are merely representative for purposes of describing example embodiments. The example embodiments may, however, be embodied in many alternate forms and should not be construed as limited to only the embodiments set forth herein.

It should be understood that there is no intent to limit example embodiments to the particular forms disclosed. On the contrary, example embodiments are to cover all modifications, equivalents, and alternatives falling within the scope of this disclosure. Like numbers refer to like elements throughout the description of the figures.

While one or more example embodiments may be described from the perspective of a network digital twin (NDT) service provider, a NDT service consumer, or the like, it should be understood that one or more example embodiments discussed herein may be performed by the one or more processors (or processing circuitry) at the applicable device. For example, according to one or more example embodiments, at least one memory may include or store computer program code, and the at least one memory and the computer program code may be configured to, with at least one processor, cause a device to perform the operations discussed herein.

As discussed herein the terminology "one or more" and "at least one" may be used interchangeably.

A simulation core of a network digital twin (NDT) might run synchronized with the wall clock time (e.g., the current, real-world, time), but also might run in the past or in the future. Other use cases of a NDT might run the simulation core faster or slower than the wall clock time.

In most cases the performance of a specific communication network instance due to configuration changes cannot be calculated by classical formulas, neither in the radio access network (RAN) nor in the core or IP. Instead, the behavior of the network may need to be calculated by numerical simulations.

For the validation of closed-loop Network Planning and Optimization (NPO) functions, the numerical simulation type used may be incremental time progression simulation. In incremental time progression simulation, the wall clock time is broken down into small time steps (e.g., a time slice) and the system state is updated according to the set of events/ activities happening in the time slice. A generalization of this is discrete-event simulation (DES), which models the operation of a system as a (discrete) sequence of events in time.

A simulation (e.g., a sandbox) of the overall network may include simulation(s) of the relevant environment and physical characteristics of network elements, simulations of the links between the network functions, and/or simulations of individual network functions.

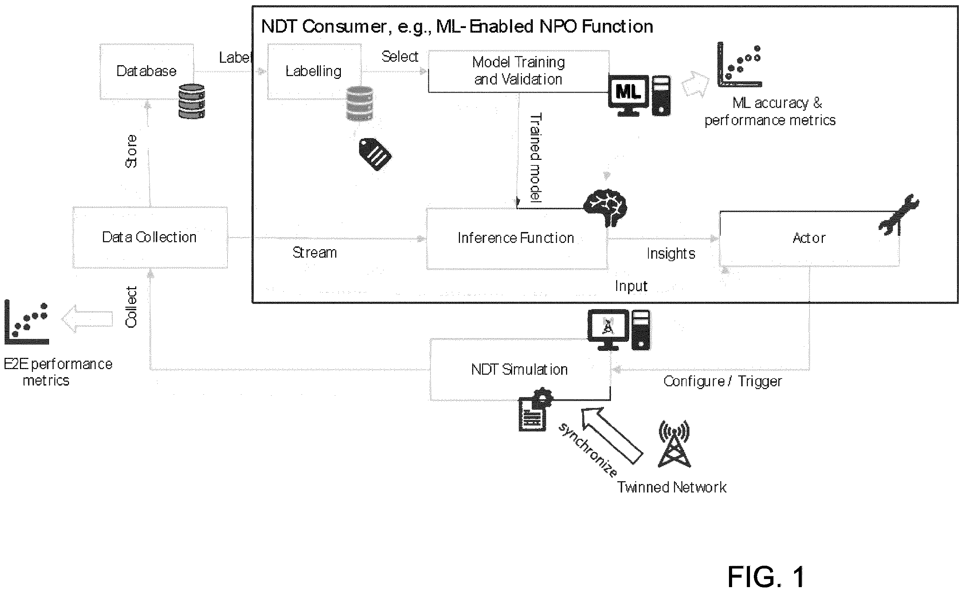

FIG. 1 shows an example of a closed-loop NPO function sandbox.

Referring to FIG. 1, a closed-loop NPO function sandbox may include a Machine Learning (ML) model, which is first trained with data from the NDT simulation. Once the ML model is trained, the NPO function uses insights from the ML model to decide on optimization actions. To evaluate the impact of the closed-loop control actions, continuous DES simulation by the NDT is required.

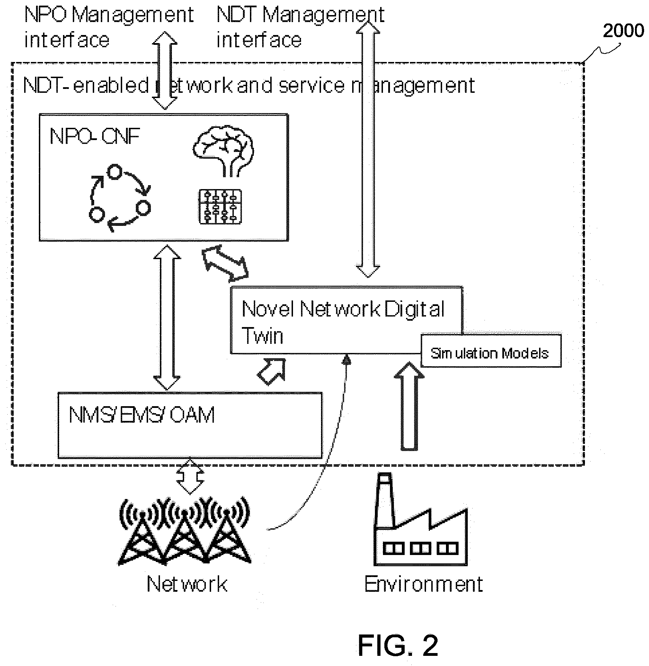

FIG. 2 shows an example of a NPO function as a NDT consumer.

Referring to FIG. 2, the NPO function 2000 may first validate its performance, or the impact of reconfigurations proposed by it using the NDT, before either being deployed to the real network or applying the proposed change to the real network.

To achieve the desired accuracy, also considering what impact a change would have if deployed at a certain point in time, it may be necessary that selected features of the NDT simulation are synchronized with the twinned real-life system (network and its environment). To achieve this synchronization, the NDT may use data from the network and environment data sources, either via existing Network Management System (NMS), Element Management System (EMS), general Operations Administration and Maintenance (OAM) or other interfaces.

Simulators (e.g., network simulators, NDTs, etc.) may parallelize their simulation, breaking down the simulation aspects into separate simulation components and calculating their effects for the next timestep in a distributed fashion.

The major issue of synchronizing the simulation component threads may be achieved by a main simulation thread that waits for, or blocks, simulation component threads to keep the individual processes synchronized. The main thread can also handle synchronization to the real-world time (e.g., the wall clock), so as to limit the simulation speed to a certain multiple of real-time passing.

A key factor in controlling a discrete event simulation (DES) or an incremental time progression NDT simulation is controlling the simulation time, (e.g., the NDT's clock). Additionally, an NDT may be synchronized with the twinned real network, i.e., NDT simulation time may be synchronized with the wall clock time.

Synchronizing the twin with the twinned network and managing the required NDT time delay to ensure consistent synchronization of the twin with the twinned network requires sophisticated simulation time management.

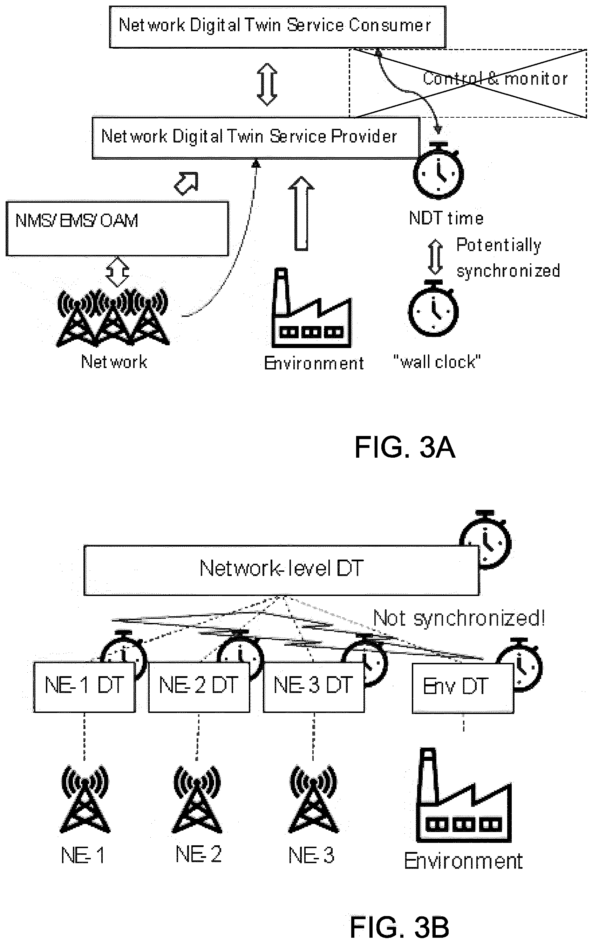

FIGS. 3A and 3B are example diagrams showing a problem of time synchronization.

Referring to FIG. 3A, for monitoring and diagnostics, an operator monitoring a production line, including a wireless network for connectivity, may want to pause and replay the NDT data visualization to inspect a potential problem. Note that the NDT service provider and the NDT service consumer may be from different vendors. If the NDT has also simulation capability, the operator may want to use the NDT to investigate how configuration changes would have affected the problem, for example if the configuration changes would have prevented the problem.

To do this, the operator needs to be able to control the NDT time. Once the investigation is done, the operator may want to continue real-time monitor of the network by re-synchronizing the NDT with the twinned real network. Accordingly, a solution for controlling the NDT is needed.

Referring to FIG. 3B, an NDT may be created by aggregating several NDT components together. For example, individual digital twins may be provided for each network element or function, as well as for the environment of the network. A network-level digital twin may then be created aggregating the individual DTs together.

In such a simulation, all the individual components need to be synchronized in time to the same clock. The network functions and their digital twin models may be provided by different vendors, such that the methods to synchronize the individual twins to the same clock need to be standardized.

Example embodiments provide a NDT Clock interface, implemented by an NDT service provider 100, which provides one or more interfaces for managing and controlling the simulation time in a NDT.

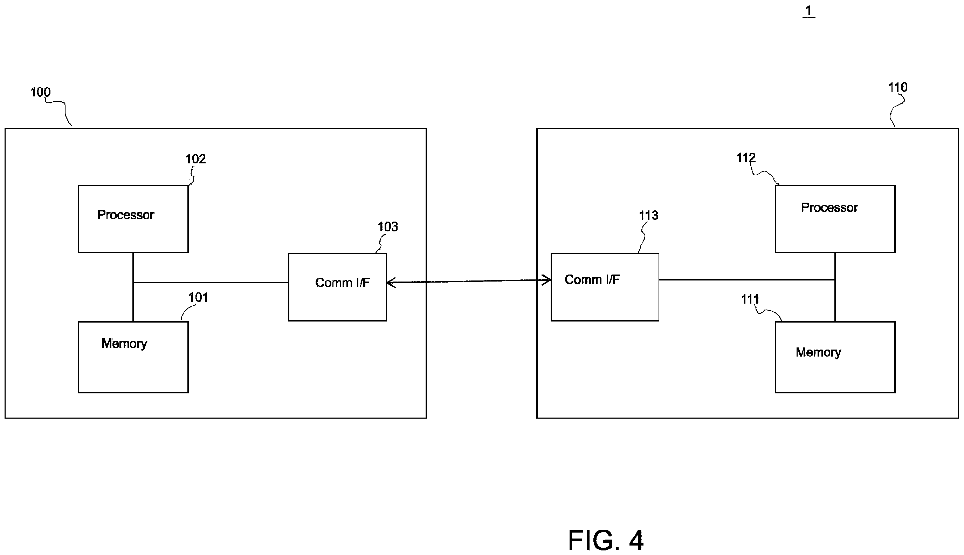

FIG. 4 is a block diagram illustrating an example system for synchronizing a clock among digital twins according to example embodiments.

Referring to FIG. 4, a system 1 for synchronizing a clock among digital twins according to example embodiments may include an NDT service provider 100 and/or an NDT service consumer 110. As shown in FIG. 4, example embodiments refer to the NDT service provider 100 and the NDT service consumer 110 as separate entities. However, example embodiments are not limited thereto. For example, the NDT service provider 100 may be implemented and/or run by the NDT service consumer 110 or the NDT service consumer 110 may be implemented and/or run by the NDT service provider 100.

The NDT service provider 100 may include a memory 101, processing circuitry (such as at least one processor 102), and/or a communication interface 103. The NDT service provider 100 may be any one of, but not limited to, a mobile device, a smartphone, a tablet, a laptop computer, a desktop computer and/or the like. The NDT service provider 100 may be configured to perform the NDT service provider functions described in accordance with example embodiments.

The memory 101 may include various special purpose program code including computer executable instructions which may cause the NDT service provider 100 to perform the one or more of the methods of the example embodiments. The communication interface 103 may include a wireless communication interface and/or a wired communication interface.

In at least one example embodiment, the processing circuitry may include at least one processor (and/or processor cores, distributed processors, networked processors, etc.), such as the at least one processor 102, which may be configured to control one or more elements of the NDT service provider 100, and thereby cause the NDT service provider 100 to perform various operations. The processing circuitry (e.g., the at least one processor 102, etc.) is configured to execute processes by retrieving program code (e.g., computer readable instructions) and data from the memory 101 to process them, thereby executing special purpose control and functions of the entire apparatus 100. Once the special purpose program instructions are loaded into, (e.g., the at least one processor 102, etc.), the at least one processor 102 executes the special purpose program instructions, thereby transforming the at least one processor 102 into a special purpose processor.

In at least one example embodiment, the memory 101 may be a non-transitory computer-readable storage medium and may include a random access memory (RAM), a read only memory (ROM), and/or a permanent mass storage device such as a disk drive, or a solid state drive. Stored in the memory 101 is program code (i.e., computer readable instructions) related to operating the NDT service provider 100.

The NDT service consumer 110 may include a memory 111, processing circuitry (such as at least one processor 112), and/or communication interface 113. The NDT service consumer 110 may be any one of, but not limited to, a mobile device, a smartphone, a tablet, a laptop computer, a desktop computer and/or the like. The NDT service consumer 110 may be configured to perform the NDT service consumer functions described in accordance with example embodiments.

Descriptions of the memory 111, the processor 112, and the communication interface 113 may be substantially similar to the memory 101, the processor 102, and the communication interface 103, respectively, and are therefore omitted.

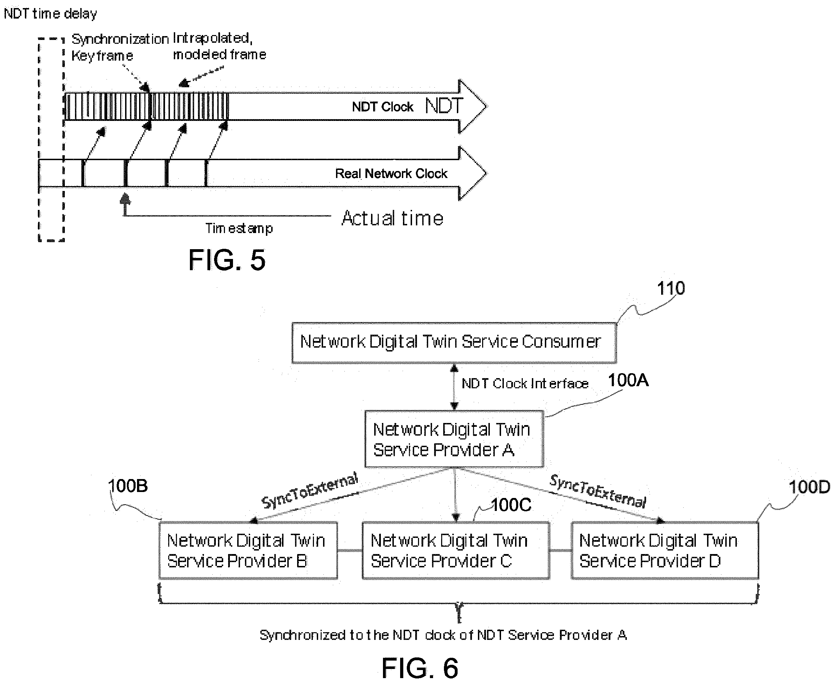

FIG. 5 is an illustration providing an example of synchronization between a real network and an NDT according to example embodiments.

Referring to FIG. 5, the NDT clock is implemented in the NDT Clock Service, which is part of the NDT simulation. The NDT simulation may be instantiated by the NDT service provider 100 and/or the NDT service consumer 110. The NDT Clock Service is instantiated as part of the NDT simulation.

The NDT clock provides a way to map simulation frames, which refer to subsequent simulation time steps or events, to the simulation time, i.e., the point in time that is being simulated. The NDT clock also controls the running of the simulation, including pausing, stopping and moving to a specified point in simulation time.

To synchronize (e.g., calibrate) the NDT simulation with the twinned system (e.g., synchronize the NDT clock with the twinned system), selected features in the simulation may be synchronized with key frames (e.g., selected features may be synchronized with timestamps of the key frames). The key frames are datasets containing measurements, parameters, alarms, etc. from the twinned network. NDT simulation may then be calibrated and/or synchronized to the measured values within the keyframe. Some examples of synchronized features include network traffic profile and demand at specified network ingress points, radio access network load at specified cells, and/or location and network traffic demand of UEs connected to a radio access network.

The key frame frequency may be lower than the simulation framerate, and the key frame frequency may also be different for different synchronized simulation features. In the simulation frames between the key frames, the selected feature may be interpolated and/or simulated. In this case, the key frames are used to calibrate the simulation to the state of the twinned real network

For example, the traffic demand of a network ingress point may be recurringly measured, and the measurement used in the NDT simulation to model the network traffic.

When the NDT simulation is instantiated, the NDT scenario is modelled after the twinned real network and for selected features synchronized with its current state. For example, in an NDT used for radio planning, the radio environment may be modelled after the real environment at a given point in time, but not synchronized after the given point.

Some selected features may be synchronized in a recurring manner. For example, selected features in the simulation may be continuously synchronized with the twinned network according to a selected frequency. Different features to be synchronized may have different synchronization frequencies. Frames occurring between the key frames may be interpolated and/or simulated. For example, if a user equipment (UE) location and movement in a radio access network is synchronized, UE movement between two synchronization frames may be interpolated based on routing on a street graph, if such graph is available. Real-time simulation in between synchronization frames may use trajectory models, which are calibrated with Kalman filter using the location information in the synchronization frames.

For example, the data traffic volume of a network ingress point may be recurringly measured. The recurring measurements may be used in the NDT simulation to model the network traffic going into the simulated network.

Some selected features may be synchronized based on a triggering event. For example, configuration changes made in the real twinned network or alarms raised in the fault management may be notified to the NDT via configuration management (CM) notifications and used to update the simulation state of configuration. Synchronization of selected features may be additionally or alternatively triggered manually or by a triggering event occurring in the NDT simulation.

The collection, transfer and processing of the measurements that are used in the key frames is not instantaneous because taking the measurements and transferring them to the NDT takes time. Thus, each feature will have its own feature synchronization delay. The delay between the simulation time of the NDT to the actual wall clock time of the twinned system/network may be referred to as NDT time delay. The current NDT time delay may be indicated by the NDTClockEvent module 123, described in more detail below.

The minimum NDT time delay necessary or sufficient for consistent synchronization of all synchronized features depends on the longest feature synchronization delay. The minimum NDT time delay may be referred to as the delay budget to twin. For example, the delay budget to twin may be equal to or longer than the longest feature synchronization delay to ensure consistent synchronization.

The delay budget to twin may be configured in the NDTClockConfiguration module 122, described in more detail below, to optimize the tradeoff between ensuring consistent synchronization and the delay between the NDT and the real twinned network, i.e., the NDT time delay.

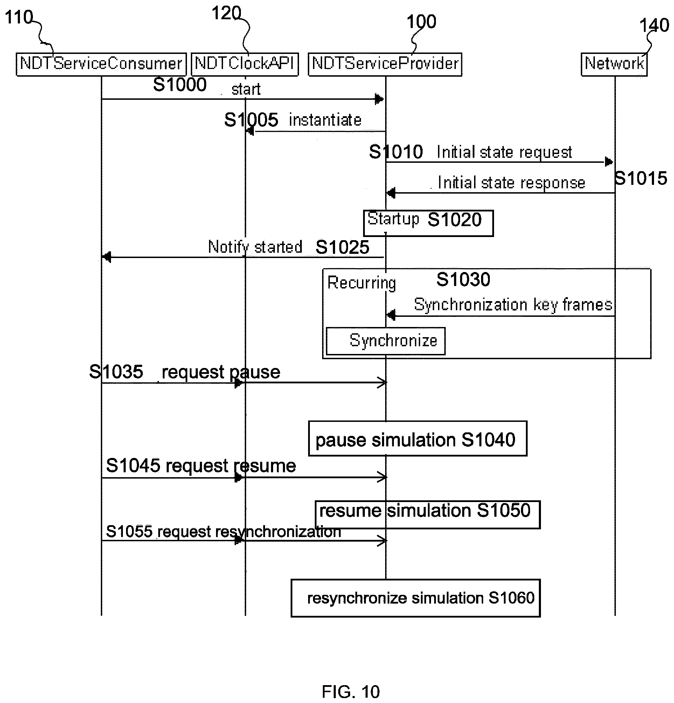

FIG. 10 is signal flow diagram illustrating an example of synchronizing an NDT clock according to example embodiments.

Referring to FIG. 10, at S1000, the NDT service consumer 110 starts the NDT simulation. For example, the NDT service consumer 110 sends a request to the NDT service provider 100 to start a NDT simulation. The request may include initial values for the NDT clock configuration. For example, the request may include generic parameters of the simulation (such as a random seed), specific configuration parameters of the NDT (such as antenna tilt in case the NDT twins a cell), and/or meta-parameters of the NDT service (such as how frequently the simulation state should be saved).

At S1005, the NDT service provider 100 instantiates the NDT simulation. The NDT simulation instantiated by the NDT service provider may include a NDT clock. For example, the NDT service provider 100 may instantiate, or implement, the NDTClockAPI 120.

At S1010, the NDT service provider 100 requests initial network state collection from network 140 (e.g., the real network being simulated by the NDT) and begins measurement collection for feature synchronization in the twinned real network.

At S1015, in response to the request, the NDT service provider 100 receives, from the network 140, initial network state information. The initial state information may include, for example, network configuration, performance management data, fault management data and/or any relevant network environment feature states (e.g., user equipment (UE) location information).

At S1020, the NDT service provider 100 starts the NDT simulation according to the initial values provided by the NDT service consumer 110.

At S1025, the NDT service provider 100 notifies the NDT service consumer 110 that the startup is completed. The notification may include a confirmation that the NDT simulation service is available.

At S1030, the NDT service provider 100 synchronizes selected features as designed in the NDT simulation. The NDT service provider may synchronize the selected features based on synchronization key frames received from the network 140.

Some examples of synchronized features include network traffic profile and demand at specified network ingress points, radio access network load at specified cells, and/or location and network traffic demand of UEs connected to a radio access network.

The synchronization described at S1030 may be performed recurringly. For example, selected features in the simulation may be continuously synchronized with the twinned network according to a selected frequency. Some selected features may be synchronized based on a triggering event. For example, configuration changes made in the real twinned network or alarms raised in the fault management may be notified to the NDT via configuration management (CM) notifications and used to update the simulation state of configuration. Synchronization of selected features may be additionally or alternatively triggered manually or by a triggering event occurring in the NDT simulation.

At S1035, the NDT service consumer 110 pauses the simulation. For example, the NDT service consumer may send a pause() request (described in more detail below) to the NDT service provider via the NDTClockAPI 120.

At S1040, the NDT service provider 100 pauses the NDT simulation. For example, the NDT service provider 100 may set the syncToTwin parameter (described in more detail below) to false to indicate that the DT clock is not currently synchronized with the wall clock (e.g., the time of the network 140).

While the NDT simulation is paused, the NDT service provider 100 may buffer synchronization key frames received from the network 140.

At S1045, the NDT service consumer 110 requests to resume the simulation. For example, the NDT service consumer 110 may send a run() request (described in more detail below) to the NDT service provider 100 via the NDTClockAPI 120.

At S1050, the NDT service provider 100 resumes the simulation. The simulation continues to run and the features may be synchronized by using the buffered synchronization key frames.

However, the NDT time (e.g., the NDT clock) continues from the time of pausing and is behind the physical twin time (e.g., the wall clock). This is indicated by the timeToDelay attribute in the NDTClockEvents and its disparity with the delayBudgetToTwin parameter in the NDTClockConfiguration, described in more detail below.

At S1055, the NDT service consumer 110 sends a request to resynchronize the NDT clock (e.g., the NDT simulation time) to the network 140 (e.g., the wall clock). For example, the NDT service consumer 110 may send a resynchronize() request to the NDT service provider 100 via the NDTClockAPI 120, described in more detail below.

At S1060 the NDT service provider 100 synchronizes the NDT clock (e.g., the NDT simulation time) with the wall clock of the network 140. For example, the NDT service provider 100 performs synchronization described above at S1030. To ensure consistent synchronization, delay to the physical network is as configured in the delayBudgetToTwin parameter, described in more detail below.

The NDT service provider 100 sets the syncToTwin parameter (described in more detail below) to true to indicate that the DT clock is synchronized with the wall clock (e.g., the time of the network 140).

FIG. 6 is a diagram showing an example system for synchronizing a clock among digital twins according to example embodiments.

Referring to FIG. 6, a NDT service provider 100A implements a NDT A, and may provide a NDT service to a NDT service consumer 110 that is implemented by aggregating NDT A with three other NDTs. For example, the three other NDTs, NDT B to NDT D, may be implemented by NDT service providers 100B, 100C, and 100D, respectively. However, example embodiments are not limited thereto, and the NDT service provider 100A may provide the NDT service to the NDT service consumer 110 implemented by aggregating any number of other NDTs together.

The NDTs A to D may be, for example NDTs of individual network elements. The NDT service provider 100A may create a network-level NDT by combining the NDTs A to D.

According to example embodiments, to enable synchronization of NDT components, the network-level NDT can be configured to synchronize to an external clock via the syncToExternal parameter in the NDTClockConfiguration. It is a reference to an external NDTClock interface of the master NDT clock. The syncToExternal, NDTClockConfiguration, and NDTClock are explained in more detail below.

According to example embodiments, the NDT service provider 100A provides a reference to its own internal NDT Clock interface to NDTs B, C and D in the syncToExternal parameter. NDTs B, C and D will then synchronize to the NDT Clock. Accordingly, any control of the clock of NDT A, such as pausing or resuming the simulation, will also affect B, C and D. This way the NDT Service Consumer may also control the complete NDT by using the NDT Clock interface of NDT A. Note that NDTs A, B, C and D may also be provided by different vendors.

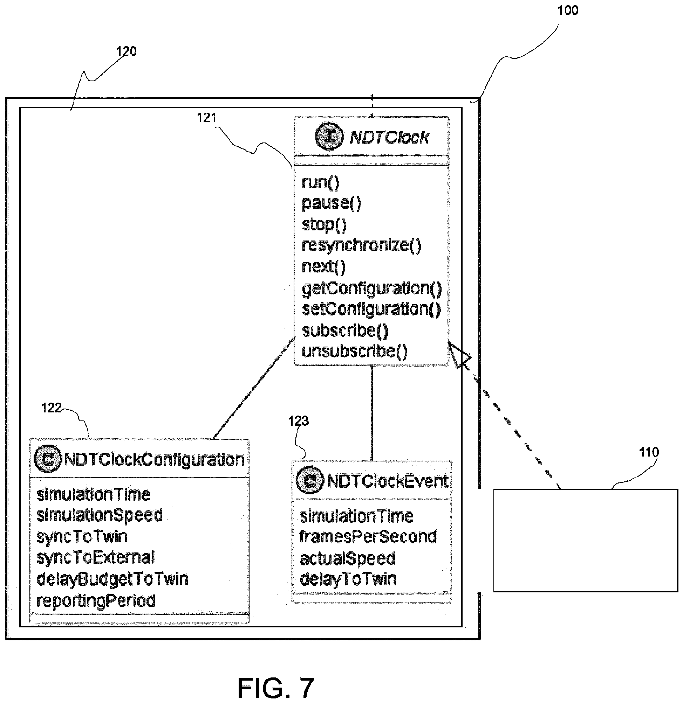

FIG. 7 is a functional block diagram of an example system for synchronizing a clock among digital twins according to example embodiments.

Referring to FIG. 7, the NDT service provider 100 may include a NDTClockAPI 120. The NDTClockAPI 120 may include a NDTClock module 121, a NDTClockConfiguration module 122, and/or a NDTClockEvent module 123. For example, the NDTClockAPI 120 shown in FIG. 7 may represent an object model of the NDTClock interface provided by an NDT Clock Management Service implemented by the NDT service provider 100, which may be, for example, an NDT simulation. The NDTClockAPI 120 may be instantiated and/or implemented by the processor 102 in FIG. 4.

Using an NDT Clock interface provided by the NDTClockAPI 120, the NDT service consumer 110 may control the simulation time in the NDT service provider 100 and at the same time the running of the simulation. The NDT Clock interface provides the necessary methods for the NDT clock transport control, configuration and methods for receiving subscription-based NDT clock events. For example, the NDTClock module 121 may provide a user interface to the NDT service consumer 110 for controlling the simulation time of the simulation (e.g., an NDT and/or a network-level NDT).

The NDTClock module 121 may include various subroutines. Examples of subroutines that may be included in the NDTClock module 121 are shown in Table 1. M/O/C shown in the following tables refers to mandatory/ optional/ conditional.

**Table 1**

| **Operation** | **Parameters** | **Returns** | **M/O/C** | **Description** |
|---|---|---|---|---|
| Run | | | O | Starts the clock to run the simulation, for example if paused |
| Pause | | | O | Pauses the clock and the simulation |
| Stop | | | O | Stops the simulation and if resumed with play, will start from the beginning |
| Resynchronize | | | O | Re-synchronize the NDT clock and the simulation to the twinned system (the real clock), if not synchronized for example after pausing |
| Next | simulationTime (optional) | | O | Runs the simulation until the provided simulationTime, or to the next reporting Period or event, if no parameter is given |
| getConfiguration | | NOTClockC onfiguration | M | Returns the current configuration |
| setConfiguration | NDTClockConf iguration | | M | Reconfigures the NDT clock with the given configuration |
| subscribe | NOTClockEve ntConsumer | subscription Id | M | Subscribing to receive N DTClockEvents |
| unsubscribe | sunscriptionId | | M | Unsubscribe from receiving NDTClockEvents |

The NDTClockConfiguration module 122 may include various parameters. Examples of parameters that may be included in the NDTClockConfiguration module 122 are shown in Table 2.

**Table 2**

| **Parameter** | **Type** | **Modifiers** | **M/O/C** | **Description** |
|---|---|---|---|---|
| simulationTime | Datetime | R/W | M | The current simulation time |
| simulationSpeed | Float | R/W | O | Requested simulation speed in x-times realtime. |
| syncToTwin | boolean | R/W | O | If the NDT should sync its clock with the "wall clock" of the twinned system |
| syncToExternal | NDTClock | R/W | O | If provided, the NDT should sync to the external NDT Clock |
| delayBudgetToTwin | | R/W | O | The delay between the simulation time and the wall clock time that should be maintained to enable reliable synchronization between the NDT and the twinned real network. |
| reportingPeriod | Float | R/W | M | How often the NDT clock should send the NDTClockEvents to subscribed consumers |

The NDTClockEvent module 123 may include various attributes. Examples of attributes that may be included in the NDTClockEvent module 123 are shown in Table 3.

**Table 3**

| **Attribute** | **Type** | **M/O/C** | **Description** |
|---|---|---|---|
| simulationTime | Datetime | M | The current simulation time |
| framesPerSecond | Float | CO | If the NDT simulation has fixed speed and dynamic simulation frame rate |
| actualSpeed | Float | M | Actual simulation speed in x-times realtime. |
| delayToTwin | Float | C | Current delay of the NDT Clock (simulation time) to the "wall clock" of the twinned network, configured to synchronize with it |

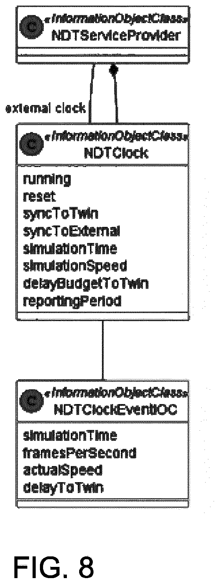

FIG. 8 is an example object model of the NDTClock interface according to example embodiments.

Referring to FIG. 8, the operations and parameters of the NDTClock interface and NDTClockConfiguration shown in FIG. 7 are flattened into the NDTClock Information Object Class (IOC). NDTClockEvents are modelled as their own IOC.

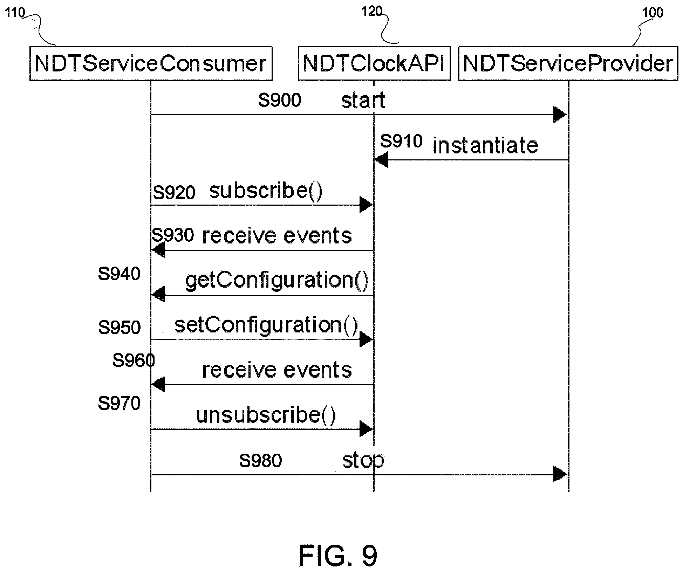

FIG. 9 is a signal flow diagram of a method for managing time in an NDT according to example embodiments.

Referring to FIG. 9, at S900 the NDT service consumer 110 starts the NDT simulation. For example, the NDT service consumer 110 sends a request to the NDT service provider 100 to start a NDT simulation. The request may include generic parameters of the simulation (such as a random seed), specific configuration parameters of the NDT (such as antenna tilt in case the NDT twins a cell), and/or meta-parameters of the NDT service (such as how frequently the simulation state should be saved).

At S910, the NDT service provider 100 instantiates the NDT simulation. The NDT simulation instantiated by the NDT service provider may include a NDT clock. For example, the NDT service provider 100 may instantiate, or implement, the NDTClockAPI 120.

For example, the initial configuration of the NDT simulation may include the initial configuration for the NDTClockAPI 120 by setting the parameters of the NDTClockConfiguration module 122. Based on the initial configuration, for example, the NDT service provider 100 may synchronize the NDT clock with the twinned system, as described above, and/or may set the delayBudgetToTwin parameter according to the delay budget to twin, as described above.

The NDT service provider 100 provides the NDT service consumer 110 with access to the NDTClockAPI 120. For example, the NDT service consumer 110 may have access to the subroutines included in the NDT clock module 121. Thus, the NDT service consumer 110 may control the simulation time in synchronization with the NDT clock via the NDT clock module 121.

At S920, the NDT service consumer 110 subscribes to receive the NDT clock events. For example, the NDT service consumer 110 may send a subscribe() request to the NDTClockAPI 120.

At S930, the NDTClockAPI 120 sends clock events to the NDT service consumer 110 periodically and/or in response to a trigger event, according to the parameters included in the NDT clock configuration 122 and/or the attributes included in the NDT clock event 123. The parameters included in the NDT clock configuration 122 and/or the attributes included in the NDT clock event 123 may initially be set to default values.

At S940, the NDT service consumer 110 reads the NDT clock configuration 122. For example, the NDTClockAPI 120 may return the NDT clock configuration 122 parameters in response to the NDT service consumer 110 sending a getConfiguration() request to the NDTClockAPI 120.

At S950, the NDT service consumer 110 changes one or more of the parameters of the NDTClockConfiguration module 122. For example, the NDT service consumer 110 may send a setConfiguration() request to the NDTClockAPI 120.

At S960, the NDTClockAPI 120 sends clock events to the NDT service consumer 110 periodically, according to the parameters included in the NDT clock configuration 122 as changed by the setConfiguration() request.

At S970, the NDT service consumer 110 sends a request to end to the NDT simulation. For example, the NDT service consumer 110 may unsubscribe to the clock events and stops receiving them. For example, the NDT service consumer 110 may send a Stop() request to the NDTClockAPI 120.

At S980, the NDT service consumer 110 stops the NDTClockAPI 120. For example, the NDT service consumer 110 may end the NDT simulation.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

When an element is referred to as being "connected," or "coupled," to another element, it can be directly connected or coupled to the other element or intervening elements may be present. By contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/ acts involved.

Specific details are provided in the following description to provide a thorough understanding of example embodiments. However, it will be understood by one of ordinary skill in the art that example embodiments may be practiced without these specific details. For example, systems may be shown in block diagrams so as not to obscure the example embodiments in unnecessary detail. In other instances, well-known processes, structures and techniques may be shown without unnecessary detail in order to avoid obscuring example embodiments.

As discussed herein, illustrative embodiments will be described with reference to acts and symbolic representations of operations (e.g., in the form of flow charts, flow diagrams, data flow diagrams, structure diagrams, block diagrams, etc.) that may be implemented as program modules or functional processes include routines, programs, objects, components, data structures, etc., that perform particular tasks or implement particular abstract data types and may be implemented using existing hardware at, for example, existing network apparatuses, elements or entities including cloud-based data centers, computers, cloud-based servers, or the like. Such existing hardware may be processing or control circuitry such as, but not limited to, one or more processors, one or more Central Processing Units (CPUs), one or more controllers, one or more arithmetic logic units (ALUs), one or more digital signal processors (DSPs), one or more microcomputers, one or more field programmable gate arrays (FPGAs), one or more System-on-Chips (SoCs), one or more programmable logic units (PLUs), one or more microprocessors, one or more Application Specific Integrated Circuits (ASICs), or any other device or devices capable of responding to and executing instructions in a defined manner.

Although a flow chart may describe the operations as a sequential process, many of the operations may be performed in parallel, concurrently or simultaneously. In addition, the order of the operations may be re-arranged. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

As disclosed herein, the term "storage medium," "computer readable storage medium" or "non-transitory computer readable storage medium" may represent one or more devices for storing data, including read only memory (ROM), random access memory (RAM), magnetic RAM, core memory, magnetic disk storage mediums, optical storage mediums, flash memory devices and/or other tangible machine-readable mediums for storing information. The term "computer-readable medium" may include, but is not limited to, portable or fixed storage devices, optical storage devices, and various other mediums capable of storing, containing or carrying instruction(s) and/or data.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks. For example, as mentioned above, according to one or more example embodiments, at least one memory may include or store computer program code, and the at least one memory and the computer program code may be configured to, with at least one processor, cause a network apparatus, network element or network device to perform the necessary tasks. Additionally, the processor, memory and example algorithms, encoded as computer program code, serve as means for providing or causing performance of operations discussed herein.

A code segment of computer program code may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

The terms "including" and/or "having," as used herein, are defined as comprising (i.e., open language). The term "coupled," as used herein, is defined as connected, although not necessarily directly, and not necessarily mechanically. Terminology derived from the word "indicating" (e.g., "indicates" and "indication") is intended to encompass all the various techniques available for communicating or referencing the object/information being indicated. Some, but not all, examples of techniques available for communicating or referencing the object/information being indicated include the conveyance of the object/information being indicated, the conveyance of an identifier of the object/information being indicated, the conveyance of information used to generate the object/information being indicated, the conveyance of some part or portion of the object/information being indicated, the conveyance of some derivation of the object/information being indicated, and the conveyance of some symbol representing the object/information being indicated.

According to example embodiments, network apparatuses, elements or entities including cloud-based data centers, computers, cloud-based servers, or the like, may be (or include) hardware, firmware, hardware executing software or any combination thereof. Such hardware may include processing or control circuitry such as, but not limited to, one or more processors, one or more CPUs, one or more controllers, one or more ALUs, one or more DSPs, one or more microcomputers, one or more FPGAs, one or more SoCs, one or more PLUs, one or more microprocessors, one or more ASICs, or any other device or devices capable of responding to and executing instructions in a defined manner.

In the context of this document, "wall clock time" refers to an actual time of day, as would be seen on a wall clock. It contrasts with the (possibly delayed or modified) time according to a simulation, for example in a NDT.

## Claims

1. A method for managing time in a network digital twin, NDT, the method comprising:
synchronizing a NDT clock with a simulation time corresponding to a wall clock time being simulated; and
controlling the simulation time in synchronization with the NDT clock, wherein controlling the simulation time includes at least one of pausing the simulation time, moving to a specified point in the simulation time, configuring the simulation speed.

2. The method of claim 1, wherein the synchronizing comprises:
mapping a simulation frame of the NDT to a point in time being simulated by the simulation frame.

3. The method of either of claim 1 or 2, wherein the synchronizing comprises:
synchronizing selected features in the NDT with key frames; and
synchronizing the NDT clock with timestamps of the key frames.

4. The method of claim 3, wherein a frequency of the key frames is lower than a simulation framerate of the NDT.

5. The method of either of claim 3 or 4, wherein the synchronizing comprises:
interpolating features included in simulation frames between the key frames; or
simulating the features included in the simulation frames between the key frames.

6. The method of any of the above claims, wherein the NDT includes a first NDT and a plurality of second NDTs, and
the synchronizing the NDT clock includes synchronizing a respective second NDT clock of each of the plurality of second NDTs with a first NDT clock of the first NDT.

7. The method of any of the above claims, further comprising:
determining a NDT time delay based on a delay between the simulation time and the wall clock time,
wherein the synchronizing includes synchronizing the NDT clock based on the NDT time delay budget.

8. The method of claim 7, wherein the NDT time delay corresponds with a longest feature synchronization delay between the simulation time and the wall clock time.

9. The method of any of the above claims, wherein the controlling the simulation time includes at least one of stopping the simulation time, synchronizing the simulation time to the wall clock, or desynchronizing the simulation time from the wall clock.

10. The method of any of the above claims, wherein
the synchronizing includes configuring a NDT time delay budget to ensure consistent synchronization of features taking into account individual synchronization delays of the features,
the controlling includes synchronizing the NDT clock with the wall clock, the NDT clock indicating an actual NDT clock delay, and
the method further comprises notifying a user if synchronization is not completed within the time delay budget.

11. A method for network optimization, comprising:
- validating the impact of a proposed reconfiguration of a real communication network by using an NDT of the real communication network, wherein using the NDT comprises managing time in the NDT according to the method of any of claims 1 to 10,
- after said validating, applying the proposed reconfiguration to the real communication network.

12. A device for managing time in a network digital twin, NDT, the device comprising:
means for synchronizing a NDT clock with a simulation time corresponding to a wall clock time being simulated; and
means for controlling the simulation time in synchronization with the NDT clock, wherein controlling the simulation time includes at least one of pausing the simulation time, moving to a specified point in the simulation time, configuring the simulation speed.

13. A device for network optimization comprising device for managing time according to claim 12 and:
- means for validating the impact of a proposed reconfiguration of a real communication network by using a NDT of the real communication network, wherein using the NDT comprises managing time in the NDT with the device for managing time,
- means for applying the proposed reconfiguration to the real communication network after said validating.
